# FASCICULE DE BREVET EUROPEEN

(11) **EP 1 857 966 B1**
(45) Date de publication et mention de la délivrance du brevet: **07.04.2010**
(21) Numéro de dépôt: 06114021.6
(22) Date de dépôt: 16.05.2006
(51) Int. Cl.: G06K 19/00

(54) **Objet portable à élément à puce personnalisée susceptible d'être interrogée par une unité de lecture externe**
Tragbarer Gegenstand mit einem personalisierten Mikrochip geeignet um von einem externen Leser abgehört zu werden
Portable device with an ID tag that might be interrogated by an external reader

(43) Date de publication de la demande: 21.11.2007
(73) Titulaire: EM Microelectronic-Marin SA, 2074 Marin (CH)
(72) Inventeur: Lugt, Eric, 1439 Rances (CH); Kayal, Abdul-Hamid, 2000 Neuchâtel (CH); Rais, Jean-Claude, 2800 Delémont (CH)
(74) Mandataire: Vigand, Philippe

(56) Documents cités:
- WO-A1-2006/087503
- DE-A1- 19 929 925
- US-A1- 2003 058 110
- US-A1- 2003 151 524
- US-A1- 2004 049 451

## Description

L'invention concerne un objet portable à élément à puce personnalisée, qui est susceptible d'être interrogée par une unité de lecture externe. L'objet portable comprend également un microprocesseur pour gérer une communication avec la puce, et des moyens d'introduction manuelle de données ou de commandes reliés au microprocesseur. L'élément à puce à code d'identification comprend des moyens d'émission et réception de signaux de données sans fil pour une communication avec une unité de lecture spécifique externe reliée à ou intégrée dans un appareil électronique. L'élément à puce comprend encore des moyens de mémorisation pour la mémorisation de données personnelles relatives à une ou plusieurs applications ou services accessibles par l'intermédiaire de l'appareil électronique, et une logique de contrôle reliée aux moyens de mémorisation.

L'invention concerne également un transpondeur susceptible d'équiper un objet portable. Le transpondeur comprend une puce personnalisée ainsi que des moyens d'émission et réception de signaux de données sans fil avec une antenne pour une communication avec une unité de lecture spécifique externe reliée à ou intégrée dans un appareil électronique. La puce du transpondeur comprend encore des moyens de mémorisation pour la mémorisation de données personnelles relatives à une ou plusieurs applications ou services accessibles par l'intermédiaire de l'appareil électronique, et une logique de contrôle reliée aux moyens de mémorisation.

Les données personnelles mémorisées dans les moyens de mémorisation peuvent être facilement communiquées à un appareil électronique par l'intermédiaire d'une unité de lecture spécifique. Pour ce faire, l'unité de lecture transmet tout d'abord des signaux d'interrogation au transpondeur afin d'une part d'alimenter ledit transpondeur qui peut être du type passif et lui permettre de transmettre des signaux de données cryptées. Un code d'identification unique de la puce du transpondeur est transmis en réponse dans les signaux de données afin que l'unité de lecture reconnaisse ledit transpondeur. Suite à cette étape de reconnaissance, des données personnelles mémorisées dans des moyens de mémorisation de la puce peuvent être transmises automatiquement par des signaux radiofréquences. Le transpondeur peut également recevoir par l'unité de lecture des signaux radiofréquences de données, afin de mémoriser les données personnelles reçues dans une mémoire non-volatile des moyens de mémorisation.

Dès que l'utilisateur de l'objet portable avec le transpondeur se trouve dans une zone déterminée autour de l'unité de lecture, les données personnelles mémorisées dans la puce du transpondeur peuvent être transférées après reconnaissance de la puce. Ceci ne garantit pas une très grande sécurité pour le possesseur d'un tel objet, car en cas de perte ou de vol de l'objet muni du transpondeur, toute personne malintentionnée peut sans difficulté utiliser les données personnelles mémorisées dans la puce du transpondeur. Ces données personnelles peuvent être des codes d'accès personnels à différentes applications, des billets pour un événement particulier, un abonnement ou une monnaie électronique. De ce fait, il est nécessaire de garantir une plus grande sécurité de ces données mémorisées dans la puce du transpondeur.

La revendication 1 a été délimitée par rapport à US-A-2003/0058110.

L'invention a donc pour but principal de fournir un objet portable à élément à puce à code d'identification ayant des moyens pour empêcher une communication non désirée avec une unité de lecture externe afin d'assurer une grande sécurité des données personnelles mémorisées dans la puce à code d'identification.

A cet effet, l'invention concerne un objet portable cité ci-devant, qui comprend les caractéristiques mentionnées dans la revendication 1.

Des formes d'exécution avantageuses de l'objet portable sont définies dans les revendications dépendantes 2 à 13.

Un avantage de l'objet portable réside dans le fait que la communication des données personnelles mémorisées dans des moyens de mémorisation de la puce avec une unité de lecture peut être bloquée et effectuée uniquement après avoir introduit un code spécifique à l'utilisateur. Ce code est introduit à l'aide des moyens d'introduction manuelle et transmis par le microprocesseur ou par l'unité de lecture à la puce, dans laquelle ledit code est contrôle avec un code spécifique mémorisé. Une communication établie avec une unité de lecture peut également être interrompue par l'introduction du même code spécifique.

Avantageusement, l'objet portable est une montre-bracelet, qui comprend un ensemble de touches tactiles en tant que moyens d'introduction manuelle. De préférence, les plages sensibles au toucher des touches tactiles sont disposées sur une face d'un verre de montre ou autour du verre de montre sur un boîtier de la montre.

Avantageusement, l'ensemble de touches tactiles de type capacitif est constitué de plages conductrices transparentes sensibles au toucher disposées sur une face intérieure du verre de montre. De préférence 12 touches tactiles sont agencées sur la face intérieure en périphérie du verre chacune dans une position correspondant à une indication de l'heure pour la composition des chiffres d'un code personnel ou pour valider une opération ou un code personnel introduit, ou pour sélectionner un menu particulier.

Avantageusement, la montre-bracelet électro-mécanique comprend des aiguilles pour l'indication de l'heure. Dans un mode d'introduction de données, une ou deux aiguilles sont déplacées alternativement sous la commande du microprocesseur dans une position d'indication de l'heure pour visualiser chaque chiffre introduit par l'utilisateur.

Les buts, avantages et caractéristiques de l'objet portable à élément à puce personnalisée susceptible d'être interrogée par une unité de lecture externe, et du transpondeur pour un objet portable apparaîtront mieux dans la description suivante en regard des dessins sur lesquels :
- la figure 1 représente un objet portable, tel qu'une montre, ayant un transpondeur à puce personnalisée selon l'invention, susceptible de communiquer avec une unité de lecture spécifique d'un appareil électronique,
- la figure 2 représente un objet portable, tel qu'une montre, ayant un transpondeur à puce personnalisée selon l'invention, susceptible de communiquer avec une unité de lecture sous forme de clé USB connectée à un terminal informatique,
- la figure 3 représente le schéma bloc d'un type de transpondeur utilisé dans le cadre de la présente invention.

Dans la description suivante, il n'est fait référence qu'à une montre-bracelet en tant qu'objet portable préféré, qui est muni d'un élément sous forme d'un transpondeur à puce à code d'identification de manière à pouvoir communiquer avec une unité de lecture spécifique par des signaux radiofréquences. Bien entendu, il aurait pu être envisagé tout autre objet portable, tel qu'une carte à puce, un badge électronique, un porte-clés, un téléphone mobile ou un autre instrument électronique. De plus, l'échange de données avec une unité de lecture externe peut être également effectué par un élément muni de moyens d'émission et réception de signaux lumineux ou signaux acoustiques.

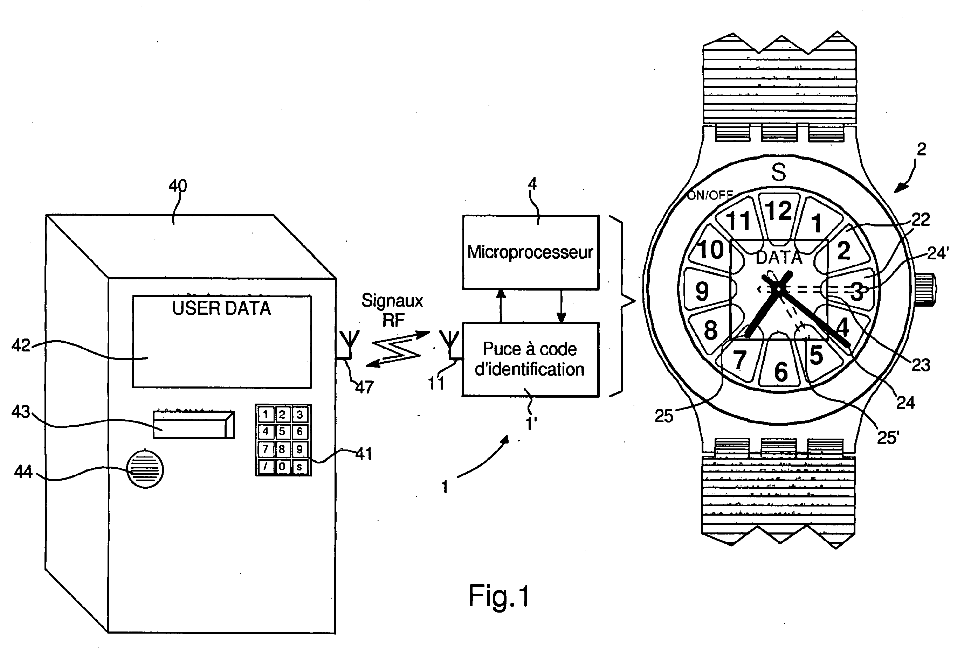

La figure 1 représente une première forme préférée d'une montre-bracelet 2 en tant qu'objet portable, qui comprend un transpondeur 1 susceptible de pouvoir communiquer des données par des signaux radiofréquences RF de manière sécurisée avec une unité de lecture spécifique dont uniquement l'antenne 47 est représentée. L'unité de lecture est dans ce cas intégrée dans un appareil électronique 40, telle qu'un automate ou distributeur de ventes de différents produits ou tickets comme représenté à la figure 1. Cet automate de ventes 40 peut comprendre par exemple un clavier 41 pour l'introduction d'un code personnel identifiant l'utilisateur du transpondeur 1 ou pour la sélection de certains produits désirés, un écran de visualisation 42 de données, une fente 43 pour retirer tel ou tel produit requis et éventuellement un haut-parleur 43 pour signaler de manière acoustique toute information.

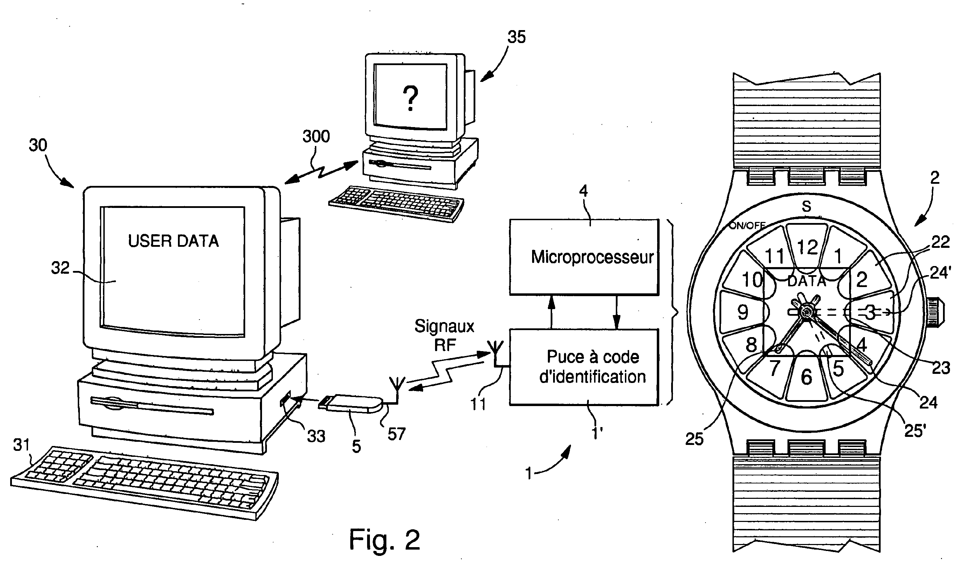

Bien entendu, l'appareil électronique 40 peut également être un terminal informatique comme montré à la figure 2 décrite ci-après, qui peut être connecté à un réseau informatique, ou un dispositif de contrôle d'accès, tel que des serrures électroniques ou des portes d'accès par exemple de chambres d'hôtels, de clubs ou de salles, des tourniquets ou des barrières. Cet appareil électronique 40 peut encore être un dispositif de contrôle du temps de présence, tel qu'une timbreuse, un dispositif de contrôle de billets d'entrée, notamment pour divers spectacles ou manifestations, un dispositif de vente tel un distributeur de boissons ou un point de vente (Point of Sale ou POS en terminologie anglaise), ou un dispositif pour le fonctionnement d'équipements, tels qu'une imprimante, une photocopieuse ou autre équipement.

Pour l'établissement d'une communication sécurisée avec une unité de lecture, le transpondeur 1, qui comprend une antenne 11 connectée directement à deux bornes de la puce 1', doit se trouver dans une zone déterminée par exemple à quelques centimètres autour de l'antenne 47 de l'unité de lecture. Une étape de reconnaissance de la puce à code d'identification unique 1' du transpondeur 1 doit tout d'abord être effectuée par l'unité de lecture. Pour ce faire, l'unité de lecture doit transmettre des signaux radiofréquences d'interrogation pour détecter dans la zone déterminée ledit transpondeur. Ces signaux d'interrogation permettent généralement d'alimenter en électricité le transpondeur qui peut être du type passif. Après réception des signaux d'interrogation, la puce à code d'identification 1' du transpondeur transmet des signaux radiofréquences RF de données cryptées, qui comprennent le code d'identification unique. Après démodulation des signaux de données reçus par l'unité de lecture, un contrôle du code d'identification est effectué dans l'unité de lecture. Si le code est reconnu, il peut être opéré un transfert de données personnelles du transpondeur à l'unité de lecture ou de l'unité de lecture au transpondeur.

Comme il peut être facile d'établir une telle communication avec une unité de lecture, dans laquelle un ou plusieurs codes d'identification de transpondeurs sont mémorisés, il peut survenir un risque en cas de perte ou de vol de la montre 2, que les données personnelles mémorisées dans la puce 1' du transpondeur 1 soient utilisées par toute personne malintentionnée en possession de la montre. Ces données personnelles mémorisées peuvent concerner des billets pour un événement particulier, un abonnement, une monnaie électronique, des clefs de serrures électroniques ou des clefs de chiffrage pour codage ou authentification sécurisée. De ce fait, il est nécessaire donc d'empêcher toute utilisation de ces données personnelles enregistrées dans des moyens de mémorisation de la puce 1' du transpondeur.

La montre-bracelet 2 selon l'invention comprend des moyens pour bloquer ou autoriser toute communication entre le transpondeur 1 et une unité de lecture correspondante afin de garantir une plus grande sécurité des données personnelles mémorisées dans la puce 1'. La montre-bracelet 2, en tant qu'objet portable, comprend donc un microprocesseur 4 pour la gestion d'une communication directe avec la puce à code d'identification 1' du transpondeur 1, et des moyens d'introduction manuelle de données ou de commandes 22 reliés au microprocesseur. Ces moyens d'introduction manuelle sont de préférence utilisés pour l'introduction d'un code spécifique d'un utilisateur, qui est géré par le microprocesseur.

Le microprocesseur 4 transmet le code spécifique introduit, par exemple un code PIN à la puce à code d'identification 1' de manière à bloquer ou autoriser toute transmission de données personnelles du transpondeur au microprocesseur ou à une unité de lecture externe. Il peut être prévu que chaque chiffre ou lettre du code spécifique soit transmis successivement à la puce à chaque activation des moyens d'introduction manuelle ou que le code spécifique mémorisé dans un registre du microprocesseur soit transmis après l'avoir introduit entièrement par les moyens d'introduction manuelle.

Il est à noter que le blocage ou l'autorisation de transmission des données personnelles du transpondeur au moyen du code spécifique peut également être effectué par l'unité de lecture par transmission de signaux radiofréquences.

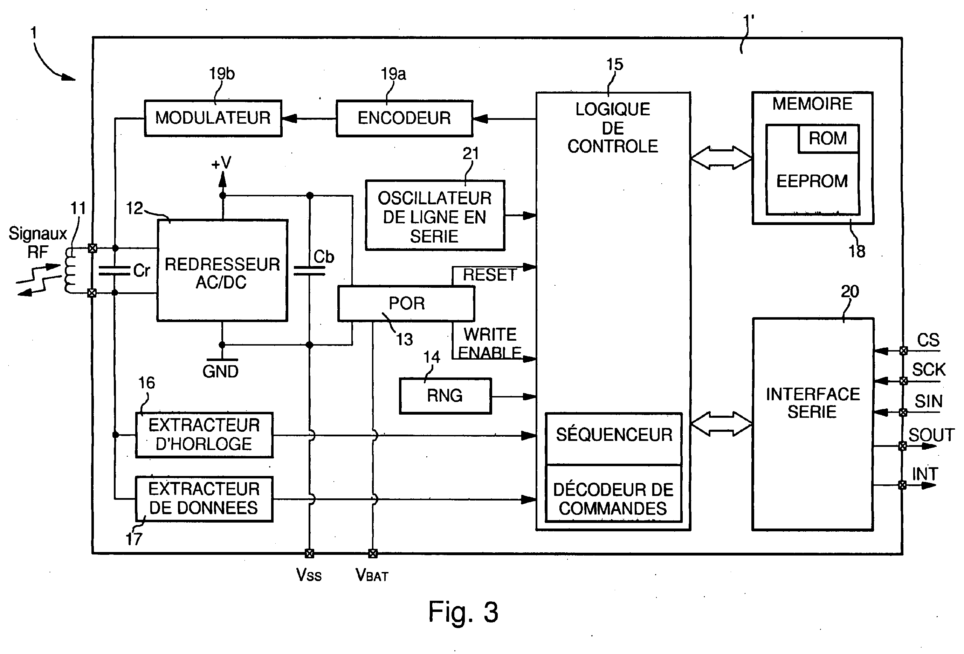

Comme expliqué ci-après en référence à la figure 3, la puce à code d'identification 1' comprend essentiellement une logique de contrôle 15 reliée à des moyens de mémorisation 18. Un algorithme de gestion d'un code personnel spécifique d'un utilisateur est mémorisé dans les moyens de mémorisation. Cet algorithme est mis en fonction dans la logique de contrôle pour bloquer ou autoriser toute transmission de signaux de données personnelles vers le microprocesseur de la montre ou vers une unité de lecture externe. Si le code spécifique introduit par les moyens d'introduction manuelle 22 correspond au code spécifique mémorisé dans les moyens de mémorisation, la logique de contrôle peut soit bloquer, soit autoriser toute transmission de données personnelles. De préférence, un blocage de transmission est automatiquement imposé dans la puce à code d'identification de manière à n'autoriser toute communication avec une unité de lecture spécifique qu'après avoir composé le code spécifique à l'aide des moyens d'introduction manuelle. Ce blocage peut survenir automatiquement dès que l'objet portable quitte la zone active déterminée autour de l'unité de lecture ou après un laps de temps d'inactivité programmé de la montre-bracelet. Le microprocesseur 4 peut imposer une telle commande de blocage après ce laps de temps d'inactivité.

Le transpondeur 1 à puce à code d'identification 1' peut être monté à l'intérieur du boîtier de la montre 2 avec le microprocesseur 4. La puce 1' comprend des bornes de contact connectées par des pistes métalliques à des bornes de connexion correspondantes du microprocesseur 4. La puce 1' peut être également montée sur ou dans le bracelet de la montre 2, alors que le microprocesseur 4 est placé à l'intérieur du boîtier de la montre. Dans ce cas, des pistes conductrices de connexion relient des bornes de contact de la puce 1' à des bornes correspondantes du microprocesseur 4 par des passages conducteurs disposés à travers le boîtier de la montre. Une source d'énergie, telle qu'une batterie ou un accumulateur peut alimenter électriquement également la puce 1' par deux bornes d'alimentation de la puce et le microprocesseur 4.

La montre-bracelet 2 est de préférence de type analogique à affichage de l'heure à l'aide des aiguilles 24, 25. Ces aiguilles sont entraînées par des moyens d'entraînement traditionnels, tels qu'un micromoteur pas-à-pas, cadencés par une base de temps pour l'affichage de l'heure. De plus, la montre-bracelet 2 comprend encore un dispositif d'affichage 23 par exemple du type à cristaux liquides pour visualiser diverses données personnelles mémorisées dans les moyens de mémorisation de la puce à code d'identification ou transmises par l'unité de lecture, ou plusieurs menus de fonctions ou de commandes de la montre sous la commande des moyens d'introduction de données ou de commandes. Le dispositif d'affichage 23 peut occuper une partie du cadran de montre 2 ou la totalité du cadran dans le cas par exemple d'une montre à affichage numérique de l'heure et de données.

Les moyens d'introduction manuelle de données ou de commandes sont constitués de préférence par un ensemble de touches tactiles 22 du type capacitif disposées sur une face intérieure en périphérie du verre de montre. Les touches tactiles sont des plages transparentes sensibles au toucher reliées de manière classique au microprocesseur 4 sous le cadran de montre. Dans cette forme d'exécution, les touches tactiles sont au nombre de 12 disposées chacune au-dessus d'une indication de l'heure du cadran de la montre. Chaque touche tactile 22 représente un chiffre d'un code personnel à introduire ou est destinée à valider une opération ou un code personnel introduit, ou à sélectionner un menu particulier. Les touches tactiles au-dessus des indications de l'heure de 1 à 10 (représentant 0) servent à composer les différents chiffres du code PIN de l'utilisateur ou d'un code complémentaire PUK également reconnu par la puce à code d'identification 1'. Les touches référencées 11 (on/off) et 12 (S) peuvent servir à la mise en fonction ou à la mise au repos des touches tactiles, et à la validation d'un code introduit à l'aide des touches 1 à 10 ou à la sélection de différents menus concernant diverses applications par exemple.

Dans un mode d'introduction de données à l'aide des touches tactiles, au moins une aiguille d'indication de l'heure 24, 25 peut être déplacée sous la commande du microprocesseur 4 dans une position d'indication de l'heure correspondant à chaque touche tactile 22 activée par un doigt d'un utilisateur. Ceci permet de confirmer à l'utilisateur visuellement et successivement chaque chiffre introduit. De préférence, les deux aiguilles d'indication de l'heure 24, 25 sont déplacées alternativement sous la commande du microprocesseur 4 pour confirmer à l'utilisateur visuellement et successivement chaque chiffre introduit. Par exemple, l'aiguille des minutes 24 est déplacée tout d'abord sur le premier chiffre du code à composer après l'activation de la touche tactile correspondante comme montré en traits interrompus avec la référence 24'. L'aiguille des heures 25 est ensuite déplacée sur le second chiffre du code à composer après l'activation de la touche tactile correspondante comme montré en traits interrompus avec la référence 25', et ainsi de suite.

Comme indiqué ci-dessus, le microprocesseur 4 de la montre est susceptible de gérer la communication avec la puce à code d'identification 1' du transpondeur 1, l'affichage d'une information sur le dispositif d'affichage numérique 23 de la montre analogique, l'introduction de codes spécifiques de l'utilisateur (codes PIN et PUK) ou de différentes données par les touches tactiles. Le code spécifique introduit par les touches tactiles 22 et traitées par le microprocesseur permet de bloquer ou d'autoriser la transmission des données mémorisées dans les moyens de mémorisation de la puce 1' vers le microprocesseur ou l'unité de lecture.

Toutes les données personnelles notamment de différentes applications sont mémorisées dans une mémoire EEPROM des moyens de mémorisation de la puce 1' du transpondeur 1. Des données personnelles peuvent concerner des biens ou des valeurs personnelles, tels que des billets pour un événement particulier, un abonnement ou une monnaie électronique. Certaines des données mémorisées dans la mémoire du transpondeur peuvent être restituées sur demande lors d'une transmission sans fil à un appareil de lecture d'un magasin ou d'un automate 40, par exemple d'une machine de vente. Il est possible de forcer une transmission cryptée de ces données après une authentification mutuelle.

La figure 2 représente une seconde forme de réalisation d'une montre-bracelet 2 en tant qu'objet portable, qui comprend un transpondeur 1 susceptible de pouvoir communiquer des données par des signaux radiofréquences RF de manière sécurisée avec une unité de lecture spécifique 5. Dans cette forme préférée de réalisation, l'unité de lecture 5 prend la forme d'une clé du type USB de manière à pouvoir être connectée à un port d'entrée du type USB 33 d'un terminal informatique 30, en tant qu'appareil électronique. Ce terminal informatique 30 comprend traditionnellement un clavier 31 et un écran d'affichage 32 d'information pour son utilisateur.

L'antenne 57 du module RF de l'unité de lecture 5 permet de transmettre des signaux d'interrogation pour détecter au moins un transpondeur 1 dans une zone déterminée autour de l'antenne 57. Dans la mesure où la montre 2 avec son transpondeur est approchée suffisamment proche de l'unité de lecture, une mise en fonction de l'algorithme d'identification ou d'un algorithme d'authentification mutuelle pour une plus haute sécurité est opérée afin que l'unité de lecture reconnaisse le transpondeur spécifique. Dès cet instant, l'unité de lecture est en mesure de transmettre des données personnelles d'application mémorisées dans le transpondeur pour l'ouverture des applications désirées, par exemple en liaison par un réseau de communication entre ordinateurs 300 à un serveur dédicacé 35. Ce serveur 35 contient par exemple une base de données centralisée à laquelle un utilisateur porteur d'un transpondeur personnalisé 1 est désireux d'accéder.

Lors d'une connexion audit réseau de communication 300 par l'intermédiaire du terminal informatique 30, les signaux d'interrogation à destination du transpondeur 1 peuvent être transmis suite à une requête du serveur dédicacé 35 ou généralement par périodes temporelles programmées. Pour la connexion par le réseau de communication 300, il peut être utilisé un protocole standard du type SSL (Secure Sockets Layer en terminologie anglaise) ou TLS (Transport Layer Security en terminologie anglaise). Après établissement de la connexion audit serveur de communication, un échange de données cryptées peut être effectué entre le serveur et l'unité de lecture. Le terminal informatique 30 lors de cette connexion est en mesure de fournir l'état de la session et d'informer sur le succès de la transaction effectuée notamment entre l'unité de lecture et le serveur.

L'unité de lecture sous forme de clé USB 5 peut comprendre dans des moyens de mémorisation l'adresse du serveur et des différentes applications correspondantes de la puce 1' du transpondeur 1. De plus, les moyens de mémorisation comprennent un logiciel de connexion nécessaire à un microprocesseur de l'unité de lecture pour initier une connexion par le réseau de communication (Internet, Intranet) pour se brancher au serveur dédicacé 35. Ces moyens de mémorisation peuvent comprendre notamment un ensemble de mémoires du type FLASH, EEPROM et RAM. Les moyens de mémorisation comprennent une partie protégée dans laquelle sont enregistrés notamment les moyens d'identification ou les moyens d'authentification mutuelle avec le transpondeur correspondant pour être mis en fonction dans un microprocesseur de l'unité de lecture, et le ou les identificateurs d'application des applications pour lesquelles l'unité de lecture est configurée. La partie protégée des moyens de mémorisation comprend également un algorithme propriétaire de chiffrage ou cryptage des données échangées avec le transpondeur, un logiciel propriétaire de segmentation et de gestion de segments mémoires de la puce du transpondeur.

Différents codes d'accès ou mots de passe de diverses applications personnelles mémorisés dans la puce 1' du transpondeur 1 peuvent être transmis sur demande à l'unité de lecture 5. Ces codes d'accès sont transmis par l'unité de lecture, soit au terminal informatique 30, soit au serveur 300. Dans le cas d'une transmission avec le terminal informatique, l'unité de lecture agit en tant qu'émulateur de carte à puce, et l'utilisateur de l'application locale doit connaître les clés d'accès. Dans le cas d'une transmission avec le serveur dédicacé 35, l'application exécutée sur ce serveur doit connaître les clés d'accès afin de se connecter de manière personnelle à toutes les applications ou services correspondants. Tous ces codes d'accès, qui peuvent correspondre à des identificateurs d'application, peuvent être mémorisés dans des segments mémoires spécifiques selon une programmation effectuée par l'unité de lecture au préalable. Le terminal ne peut pas avoir accès à cette partie mémoire avec les codes d'accès de l'unité de lecture et du transpondeur.

Comme indiqué ci-devant, les échanges sécurisés de données peuvent concerner des applications ou services relatifs par exemple à la billetterie électronique (e-ticket), au paiement ou au chargement de monnaie électronique (e-purse), au paiement par carte de crédit usuelle, ou à l'attribution et à la gestion de différents droits d'accès physique, tels que des clés électroniques de chambre d'hôtels, de clubs ou de salles.

La figure 3 montre un exemple d'un schéma bloc d'un transpondeur préféré pour équiper une montre-bracelet 2 en tant qu'objet portable. La puce à code d'identification 1' du transpondeur comprend en plus d'un algorithme d'identification traditionnel, un algorithme d'authentification mutuelle avec une unité de lecture spécifique. Ce transpondeur préféré est par exemple celui commercialisé par la société EM Microelectronic-Marin SA sous la référence EM S4151 "2Kbit READ/WRITE CONTACTLESS IDENTIFICATION DEVICE WITH SPI". Le transpondeur est par exemple du type passif, mais pourrait également être alimenté par une batterie aux bornes V_{BAT} et V_{SS} montrées à la figure 3. On se référera autant que possible aux spécifications techniques de ce circuit qui sont disponibles publiquement et qui sont par ailleurs incorporées ici par référence.

Comme montré à la figure 3, ce transpondeur, qui peut fonctionner à une fréquence de l'ordre de 125 kHz, est notamment agencé pour coopérer avec une interface de lecture de l'unité de lecture. Cette interface est par exemple celle commercialisée par la société EM Microelectronic-Marin SA sous la référence EM4095 "READ/WRITE ANALOG FRONT END FOR 125kHz RFID BASESTATION" dont la spécification technique disponible publiquement est également incorporée ici par référence. On notera que l'utilisation des composants susmentionnés n'est pas limitative et que d'autres composants analogues pourraient être utilisés pour autant qu'ils permettent de remplir les fonctions désirées.

Il est à noter qu'il peut être prévu d'utiliser un transpondeur 1 et une interface de l'unité de lecture 5 fonctionnant à des fréquences HF de l'ordre de 13.56 MHz ou également à plus hautes fréquences (UHF et VHF).

Le transpondeur 1, qui comprend une puce à code d'identification 1', peut être alimenté par le champ électromagnétique ambiant, qui est principalement émis par l'unité de lecture. Ce champ électromagnétique, tel que des signaux RF, induit une tension aux bornes d'une bobine 11 formant antenne reliée à la puce. Cette tension est redressée par un bloc redresseur AC/DC 12 et fournit la tension d'alimentation +V nécessaire au fonctionnement du transpondeur. Un bloc de contrôle de mise sous tension 13 assure une régulation de tension et une initialisation adéquate d'une logique de contrôle 15 de la puce 1'.

Le transpondeur 1 comprend en outre des moyens d'extraction d'horloge 16 permettant de dériver du champ électromagnétique, c'est-à-dire des signaux RF, un signal d'horloge assurant le cadencement de la logique de contrôle 15, des moyens d'extraction de données 17 permettant d'extraire des données modulées dans les signaux RF, en combinaison d'un bloc décodeur de commandes de la logique de contrôle. Le transpondeur 1 comprend par ailleurs des moyens de mémorisation 18, constitués notamment d'une mémoire reprogrammable EEPROM et d'une mémoire morte ROM, et des moyens d'encodage 19a et de modulation 19b permettant de moduler et transmettre des informations stockées par exemple dans lesdits moyens de mémorisation 18. Ces moyens d'encodage 19a sont reliés en sortie de la logique de contrôle 15.

La mémoire EEPROM de la puce 1' du transpondeur 1 peut être segmentée à l'aide d'une programmation effectuée par l'unité de lecture afin notamment de réserver un ou plusieurs segments mémoires à des codes ou données relatives à une application spécifique. Cette mémoire EEPROM peut être constituée, de manière non limitative, d'une partie réservée à sa gestion et à sa sécurité. Cette partie peut comprendre notamment des informations de contrôle et de protection ainsi que les différents codes de sécurité tels que le mot de passe, les clés pour l'authentification mutuelle, ainsi que les codes PIN et PUK. Cette partie est propre à la puce et soumise à des conditions d'accès spécifiques.

L'espace mémoire restant de la mémoire EEPROM est disponible notamment pour l'utilisateur et forme un espace mémoire utilisateur. On notera que des données complémentaires relatives au transpondeur peuvent également être stockées dans cet espace mémoire. Cet espace mémoire utilisateur peut être utilisé pour gérer une pluralité d'applications distinctes notamment lors d'une connexion à un serveur dédicacé. Comme indiqué ci-devant, cet espace mémoire est de préférence segmenté en plusieurs segments mémoires qui contiennent des données d'applications propres à diverses applications. Au moins un segment mémoire est attribué à chaque application spécifique.

Il peut encore être prévu dans l'espace mémoire de stocker des données additionnelles et des données de répertoire qui permettent de fournir une indication des applications mémorisées dans la puce du transpondeur, ainsi que leur position mémoire. Le répertoire contient donc des identificateurs d'application, qui sont composés spécifiquement chacun d'un numéro de l'utilisateur et d'un numéro du service. Pour de plus amples informations au sujet de la configuration d'un tel transpondeur, il est fait référence à la demande de brevet EP 1 332 478, qui est incorporée ici par référence.

La mémoire morte ROM comprend pour sa part de manière non limitative les informations relatives à son identification, respectivement un numéro de série et un numéro ou code d'identification qui sont uniques, c'est-à-dire propres à chaque transpondeur. Ces informations sont programmées par laser ou en OTP (one time programmable). Ce code d'identification unique de la puce 1' est différent du code spécifique PIN ou du code complémentaire PUK d'un utilisateur, qui sont mémorisés dans la mémoire EEPROM. Le code complémentaire PUK n'est utilisé qu'en cas d'oubli du code spécifique PIN de manière à bloquer ou autoriser toute transmission de données personnelles vers une unité de lecture.

Dans le cas du transpondeur EM S4151 représenté à la figure 3, la logique de contrôle 15 contient les moyens pour exécuter l'authentification mutuelle (standard ou propriétaire) avec une unité de lecture 5, le cryptage de données, la gestion du code PIN d'utilisateur et du code complémentaire PUK d'utilisateur. Les clés de cryptage et les codes de l'utilisateur sont mémorisés dans la mémoire EEPROM. La puce 1' du transpondeur 1 comprend également un générateur de nombres aléatoires RNG 14 nécessaire pour des opérations d'authentification.

La puce 1' est susceptible d'être reliée directement par une interface série 20 reliée à la logique de contrôle 15 par notamment 5 bornes de connexion CS, SCK, SIN, SOUT, INT à un microprocesseur ou microcontrôleur. Le microprocesseur permet de gérer la communication avec la puce comme expliquée ci-dessus. Le signal CS est relatif à la sélection de la puce pour l'interface série 20. Le signal SCK est un signal d'horloge pour l'interface série. Le signal SIN est un signal de réception de données en série. Le signal SOUT est un signal de sortie de données en série à destination du microprocesseur. Finalement, le signal SINT est un signal de requête d'interruption. Dans le cas où le signal CS est inactif, un oscillateur de ligne en série 21 adapté génère des signaux de cadencement pour la logique de contrôle 15 pour effectuer des commandes de ligne en série.

A partir de la description qui vient d'être faite, de multiples variantes de réalisation de l'objet portable à élément à puce à code d'identification peuvent être conçues par l'homme du métier sans sortir du cadre de l'invention définie par les revendications. Le transpondeur, qui comprend la puce, peut être monté dans d'autres objets portables, tels qu'une carte à puce, un badge électronique, un porte-clés ou un téléphone. Il peut être prévu que le microprocesseur de l'objet portable soit relié à des moyens d'émission et réception de signaux sans fil de l'objet pour une transmission de signaux de gestion à destination du transpondeur externe à l'objet portable. Les touches tactiles des moyens d'introduction manuelle peuvent être disposées également sur le bracelet de la montre ou sur une partie du boîtier. Le code spécifique introduit plusieurs fois par les moyens d'introduction manuelle peut alternativement bloquer ou autoriser toute communication avec une unité de lecture.

## Revendications

1. Objet portable (2) comprenant :
- un élément sous la forme d'un transpondeur (1) ayant une antenne (11) reliée à une puce à code d'identification (1'), qui comprend des moyens d'émission et réception de signaux de données sans fil par l'antenne (11, Cr) pour une communication avec une unité de lecture spécifique (5) externe, qui est reliée à ou intégrée dans un appareil électronique (30, 40), dans une zone déterminée autour de l'unité de lecture après reconnaissance par l'unité de lecture du code d'identification unique de la puce, des moyens de mémorisation (18) dans la puce pour la mémorisation de données personnelles relatives à une ou plusieurs applications ou services accessibles par l'intermédiaire de l'appareil électronique, et une logique de contrôle (15) dans la puce reliée aux moyens de mémorisation,
- un microprocesseur (4) pour gérer une communication avec la puce, et
- des moyens d'introduction manuelle de données ou de commandes (22) reliés au microprocesseur,
**caractérisé en ce que** la puce à code d'identification comprend un algorithme de gestion d'un code personnel spécifique d'un utilisateur mémorisé dans les moyens de mémorisation, en plus du code d'identification unique de la puce, le code spécifique personnel étant mis en fonction dans la logique de contrôle pour bloquer ou autoriser toute transmission automatique de signaux de données personnelles vers une unité de lecture externe, et
**en ce que** les moyens d'introduction manuelle sont constitués par un ensemble de touches tactiles (22) de type capacitif pour permettre d'introduire manuellement un code spécifique d'un utilisateur correspondant au code spécifique mémorisé dans les moyens de mémorisation de la puce et le transmettre à la puce par l'intermédiaire du microprocesseur, afin de bloquer ou autoriser toute communication automatique entre le transpondeur (1) à puce à code d'identification et l'unité de lecture externe (5).

2. Objet portable (2) selon la revendication 1, **caractérisé en ce que** le transpondeur est alimenté électriquement par une source d'énergie, telle qu'une batterie, dont chaque pole est relié à une borne d'alimentation respective (Vbat, Vss) de la puce.

3. Objet portable (2) selon l'une des revendications précédentes, **caractérisé en ce que** le microprocesseur (4) est relié électriquement à des bornes de contact (CS, SCK, SIN, SOUT, INT) de la puce (1') pour une transmission bidirectionnelle de signaux de données et de commandes, et **en ce que** les moyens d'introduction manuelle permettent d'introduire un code spécifique correspondant au code spécifique mémorisé dans les moyens de mémorisation de la puce afin de bloquer toute communication automatique entre le transpondeur (1) à puce à code d'identification et l'unité de lecture externe (5).

4. Objet portable (2) selon l'une des revendications précédentes, **caractérisé en ce que** le code personnel de l'utilisateur est mémorisé dans une position mémoire déterminée d'une mémoire non-volatile, telle qu'une mémoire EEPROM, des moyens de mémorisation (18) de manière à être reprogrammable par une gestion dans la logique de commande (15) de la puce en fonction de signaux de programmation transmis par l'unité de lecture ou par le microprocesseur (4) suite à une activation des moyens d'introduction manuelle (22).

5. Objet portable (2) selon la revendication 4, **caractérisé en ce qu'**un second code personnel complémentaire différent du premier code personnel mémorisé est mémorisé dans une autre position mémoire déterminée de la mémoire EEPROM pour permettre de débloquer ou modifier le premier code personnel en cas d'oubli dudit premier code.

6. Objet portable (2) selon l'une des revendications précédentes, **caractérisé en ce qu'**un algorithme d'authentification mutuelle avec une clé de codage sont mémorisés dans les moyens de mémorisation (18) de manière à être mis en fonction dans la logique de commande (15) de la puce pour des opérations d'authentification avec une unité de lecture, et **en ce que** la puce comprend un générateur de nombres aléatoires (14) relié à la logique de commande pour la fourniture d'au moins un nombre aléatoire utilisé lors de la mise en fonction de l'algorithme d'authentification mutuelle.

7. Objet portable (2) selon l'une des revendications précédentes, **caractérisé en ce qu'**il comprend un dispositif d'affichage (23) relié au microprocesseur (4) pour visualiser diverses données personnelles mémorisées dans les moyens de mémorisation (18) de la puce à code d'identification, ou plusieurs menus de fonctions ou de commandes de l'objet portable, les moyens d'introduction manuelle (22) permettant de fournir des signaux de commande au microprocesseur pour la sélection de différents menus à visualiser sur le dispositif d'affichage.

8. Objet portable (2) en tant que montre-bracelet électro-mécanique à affichage de l'heure par des aiguilles (24, 25) selon l'une des revendications précédentes, **caractérisé en ce que** les moyens d'introduction manuelle sont constitués par l'ensemble de touches tactiles (22), dont les plages sensibles au toucher sont disposées sur une face d'un verre de montre ou autour du verre de montre sur un boîtier de la montre.

9. Objet portable (2) selon la revendication 8, **caractérisé en ce que** l'ensemble de touches tactiles de type capacitif est constitué de plages conductrices transparentes sensibles au toucher disposées sur une face intérieure du verre de montre, et **en ce que** les plages sensibles au toucher en nombre égal à 12 sont agencées sur la face intérieure en périphérie du verre chacune dans une position correspondant à une indication de l'heure, chaque plage sensible représentant un chiffre d'un code personnel à introduire ou étant destiné à valider une opération ou un code personnel introduit, ou à sélectionner un menu particulier, et **en ce qu'**au moins une des touches tactiles sert à la mise en fonction ou à la mise au repos des touches tactiles.

10. Objet portable (2) selon l'une des revendications 8 et 9, **caractérisé en ce que** dans un mode d'introduction de données, au moins une aiguille d'indication de l'heure (24, 25) peut être déplacée sous la commande du microprocesseur (4) dans une position d'indication horaire correspondant à chaque plage sensible (22) activée par un doigt d'un utilisateur pour indiquer visuellement et successivement chaque chiffre introduit à transmettre à la puce à code d'identification.

11. Objet portable (2) selon la revendication 10, **caractérisé en ce que** les deux aiguilles d'indication de l'heure (24, 25) sont déplacées alternativement sous la commande du microprocesseur (4) dans une position d'indication de l'heure correspondant à chaque plage sensible (22) activée par un doigt d'un utilisateur pour indiquer visuellement et successivement chaque chiffre introduit à transmettre à la puce à code d'identification après chaque activation de la plage sensible correspondante.

12. Objet portable (2) selon l'une des revendications 8 à 10, **caractérisé en ce que** chaque chiffre introduit par une plage sensible au toucher correspondante de l'ensemble de touches tactiles des moyens d'introduction manuelle (22) est visualisé sur un dispositif d'affichage à cristaux liquides (23).

13. Objet portable (2) en tant que montre-bracelet selon l'une des revendications précédentes, **caractérisé ce que** le transpondeur (1) à puce à code d'identification (1') est monté sur ou dans le bracelet de la montre, alors que le microprocesseur (4) est monté à l'intérieur d'un boîtier de la montre, et en ce que des pistes conductrices de connexion relient des bornes de contact (CS, SCK, SIN, SOUT, INT) de la puce (1') au microprocesseur (4) par des passages conducteurs disposés à travers le boîtier de la montre.

## Claims

1. Portable object (2) including:
- an element in the form of a transponder (1) that has an antenna (11) connected to a chip (1') with an identification code, which includes wireless means for transmitting and receiving data signals via the antenna (11, Cr) for communicating with a specific, external, reader unit (5), which is connected to or integrated in an electronic apparatus (30, 40), within a determined area around the reader unit, after the reader unit has recognised the unique identification code of the chip, storage means (18) inside the chip for storing personal data relating to one or several applications or services that are accessible via the electronic apparatus, and a control logic (15) in the chip, connected to the storage means,
- a microprocessor (4) for managing communication with the chip, and
- means (22) for manually inputting data or commands, connected to the microprocessor,
**characterized in that** the chip with the identification code includes an algorithm for managing a specific, personal, user code stored in the storage means, in addition to the unique chip identification code, wherein the specific, personal code is activated in the control logic to block or authorize any automatic transmission of personal data signals to an external reader unit, and
**in that** the manual inputting means are formed by a set of capacitive touch keys (22) for manually inputting a specific user code that corresponds to the specific code stored in the chip storage means and transmitting said code to the chip, via the microprocessor, so as to block or authorize any automatic transmission between the transponder (1), which has the chip with an identification code, and the external reader unit (5).

2. Portable object (2) according to claim 1, **characterized in that** the transponder is electrically powered by an energy source, such as a battery, each pole of which is connected to a respective supply terminal (Vbat, Vss) of the chip.

3. Portable object (2) according to any of the preceding claims, **characterized in that** the microprocessor (4) is electrically connected to contact terminals (CS, SCK, SIN, SOUT, INT) of the chip (1') for the two-way transmission of data and control signals, and **in that** the manual inputting means can input a specific code corresponding to the specific code stored in the chip storage means so as to block any automatic communication between the transponder (1), which has the chip with an identification code chip, and the external reader unit (5).

4. Portable object (2) according to any of the preceding claims, **characterized in that** the user's personal code is stored in a determined position in a non-volatile memory, such as an EEPROM memory, of the storage means (18) to allow said code to be reprogrammed by managing the chip control logic (15) in accordance with the programming signals transmitted by the reader unit or by the microprocessor (4) after the manual inputting means (22) have been activated.

5. Portable object (2) according to claim 4, **characterized in that** a second, complementary, personal code, different from the first stored personal code is stored in another determined memory position of the EEPROM memory to allow the first personal code to be unblocked or changed if said first code is forgotten.

6. Portable object (2) according to any of the preceding claims, **characterized in that** a mutual authentication algorithm with an encoding key is stored in the storage means (18) so as to be activated in the chip control logic (15) for authentication operations with a reader unit, and **in that** the chip includes a random number generator (14) connected to the control logic for supplying at least one random number, used when the mutual authentication algorithm is activated.

7. Portable object (2) according to any of the preceding claims, **characterized in that** it includes a display device (23) connected to the microprocessor (4) for displaying various personal data stored in the storage means (18) of the chip with an identification code, or several function and command menus of the portable object, wherein the manual inputting means (22) supply control signals to the microprocessor to select different menus for displaying on the display device.

8. Electromechanical wristwatch displaying the time via hands (24, 25) as a portable object (2) according to any of the preceding claims, **characterized in that** the manual inputting means are formed by the set of touch keys (22), whose touch sensitive pads are arranged on one surface of a watch crystal or around the watch crystal on the watch case.

9. Portable object (2) according to claim 8, **characterized in that** the set of capacitive touch keys is formed of transparent, touch-sensitive, conductive pads arranged on an inner surface of the watch crystal, and **in that** the touch-sensitive pads, which are 12 in number, are arranged on the inner, peripheral surface of the crystal, each in a position that corresponds to a time indication, wherein each sensitive pad represents a number of a personal code to be inputted or is for validating an operation or personal code that has been inputted, or for selecting a particular menu, and **in that** at least one of the touch keys is used for switching the touch keys on or off.

10. Portable object (2) according to any of claims 8 or 9, **characterized in that** in a data input mode, at least one time-indicating hand (24, 25) can be moved under the control of the microprocessor (4) into a time-indicating position that corresponds to each sensitive pad (22) activated by the user's finger to indicate visually, in succession, each inputted number to be transmitted to the chip with an identification code.

11. Portable object (2) according to claim 10, **characterized in that** the two time-indicating hands (24, 25) are moved alternately under the control of the microprocessor (4) into a time-indicating position corresponding to each sensitive pad (22) activated by a user's finger to indicate visually, in succession, each inputted number to be transmitted to the chip with an identification code after each activation of the corresponding sensitive pad.

12. Portable object (2) according to any of claims 8 to 10, **characterized in that** each number inputted via a corresponding touch sensitive pad of the set of touch keys of the manual inputting means (22) is displayed on a liquid crystal display device (23).

13. Wristwatch as a portable object (2) according to any of the preceding claims, **characterized in that** the transponder (1) with the identification code chip (1') is mounted on or in the watch wristband or bracelet, while the microprocessor (4) is mounted inside the watch case, and **in that** conductive connecting paths link contact terminals (CS, SCK, SIN, SOUT, INT) of the chip (1') to the microprocessor (4) via conductive passages arranged through the watch case.

## Patentansprüche

1. Tragbarer Gegenstand (2), der umfasst:
- ein Element in Form eines Transponders (1), der eine Antenne (11) besitzt, die mit einem Chip (1') mit Identifizierungscode verbunden ist, das Mittel zum drahtlosen Senden und Empfangen von Datensignalen über die Antenne (11, Cr) für eine Kommunikation mit einer mit einem elektronischen Gerät (30, 40) verbundenen oder darin integrierten externen spezifischen Leseeinheit (5) in einer bestimmten Zone um die Leseeinheit nach der Erkennung des eindeutigen Identifizierungscodes des Chips durch die Leseeinheit, Speichermittel (18) im Chip für die Speicherung persönlicher Daten, die auf eine oder mehrere Anwendungen oder Dienste bezogen sind, auf die über das elektronische Gerät zugegriffen werden kann, und eine Steuerlogik (15) im Chip, die mit den Speichermitteln verbunden ist, enthält,
- einen Mikroprozessor (4), um eine Kommunikation mit dem Chip zu steuern, und
- Mittel zum manuellen Eingeben von Daten oder Befehlen (22), die mit dem Mikroprozessor verbunden sind,
**dadurch gekennzeichnet, dass** der Chip mit Identifizierungscode zusätzlich zu dem eindeutigen Identifizierungscode des Chips einen Steueralgorithmus für einen spezifischen persönlichen Code eines Anwenders enthält, der in den Speichermitteln gespeichert ist, wobei der spezifische persönliche Code in der Steuerlogik verwendet wird, um jegliches automatisches Senden persönlicher Datensignale zu einer externen Leseeinheit zu blockieren oder zuzulassen, und
dass die manuellen Eingabemittel durch eine Gesamtheit taktiler Tasten (22) des kapazitiven Typs gebildet sind, um das manuelle Eingeben eines spezifischen Codes eines Anwenders zu ermöglichen, der dem in den Speichermitteln des Chips gespeicherten spezifischen Code entspricht, und um ihn über den Mikroprozessor an den Chip zu übertragen, um jegliche automatische Kommunikation zwischen dem Transponder (1), der den Chip mit Identifizierungscode besitzt, und der externen Leseeinheit (5) zu blockieren oder zuzulassen.

2. Tragbarer Gegenstand (2) nach Anspruch 1, **dadurch gekennzeichnet, dass** der Transponder durch eine Energiequelle wie etwa eine Batterie elektrisch versorgt wird, wovon jeder Pol mit einem entsprechenden Versorgungsanschluss (Vbat, Vss) des Chips verbunden ist.

3. Tragbarer Gegenstand (2) nach einem der vorhergehenden Ansprüche, **dadurch gekennzeichnet, dass** der Mikroprozessor (4) mit Kontaktanschlüssen (CS, SCK, SIN, SOUT, INT) des Chips (1') für eine bidirektionale Übertragung von Daten- und Befehlssignalen elektrisch verbunden ist und dass die manuellen Eingabemittel das Eingeben eines spezifischen Codes ermöglichen, der dem in den Speichermitteln des Chips gespeicherten spezifischen Code entspricht, um jegliche automatische Kommunikation zwischen dem Transponder (1), der den Chip mit Identifizierungscode besitzt, und der externen Leseeinheit (5) zu blockieren.

4. Tragbarer Gegenstand (2) nach einem der vorhergehenden Ansprüche, **dadurch gekennzeichnet, dass** der persönliche Code des Anwenders an einer bestimmten Speicherposition eines nichtflüchtigen Speichers, wie etwa eines EEPROM-Speichers, der Speichermittel (18) gespeichert ist, derart, dass er durch eine Steuerung in der Steuerlogik (15) des Chips in Abhängigkeit von Programmierungssignalen, die von der Leseeinheit oder von dem Mikroprozessor (4) infolge einer Aktivierung der manuellen Eingabemittel (22) gesendet werden, umprogrammierbar ist.

5. Tragbarer Gegenstand (2) nach Anspruch 4, **dadurch gekennzeichnet, dass** ein zweiter, komplementärer persönlicher Code, der von dem gespeicherten ersten persönlichen Code verschieden ist, an einer anderen bestimmten Speicherposition des EEPROM-Speichers gespeichert ist, um die Aufhebung der Blockierung oder die Modifikation des ersten persönlichen Codes zu ermöglichen, falls der erste Code vergessen wurde.

6. Tragbarer Gegenstand (2) nach einem der vorhergehenden Ansprüche, **dadurch gekennzeichnet, dass** ein Algorithmus zur gegenseitigen Authentifizierung mit einem Codierungsschlüssel in den Speichermitteln (18) gespeichert sind, derart, dass sie in der Steuerlogik (15) des Chips für Authentifizierungsoperationen mit einer Leseeinheit benutzt werden, und dass der Chip einen Zufallszahlgenerator (14) umfasst, der mit der Steuerlogik verbunden ist, um wenigstens eine Zufallszahl zu liefern, die verwendet wird, wenn der Algorithmus zur gegenseitigen Authentifizierung benutzt wird.

7. Tragbarer Gegenstand (2) nach einem der vorhergehenden Ansprüche, **dadurch gekennzeichnet, dass** er eine Anzeigevorrichtung (23) umfasst, die mit dem Mikroprozessor (4) verbunden ist, um verschiedene persönliche Daten, die in den Speichermitteln (18) des Chips mit Identifizierungscode gespeichert sind, oder mehrere Menüs von Funktionen oder Befehlen des tragbaren Gegenstands anzuzeigen, wobei die manuellen Eingabemittel (22) ermöglichen, an den Mikroprozessor Steuersignale für die Auswahl verschiedener Menüs, die auf der Anzeigevorrichtung angezeigt werden sollen, zu liefern.

8. Tragbarer Gegenstand (2) in Form einer elektromechanischen Armbanduhr mit Stundenanzeige durch Zeiger (24, 25) nach einem der vorhergehenden Ansprüche, **dadurch gekennzeichnet, dass** die manuellen Eingabemittel durch eine Gesamtheit taktiler Tasten (22) gebildet sind, deren für Berührung sensible Bereiche auf einer Fläche eines Uhrenglases oder um ein Uhrenglas an einem Gehäuse der Uhr angeordnet sind.

9. Tragbarer Gegenstand (2) nach Anspruch 8, **dadurch gekennzeichnet, dass** die Gesamtheit von taktilen Tasten des kapazitiven Typs gebildet ist durch lichtdurchlässige leitende Bereiche, die für eine Berührung empfindlich sind und auf einer inneren Fläche des Uhrenglases angeordnet sind, und dass die für eine Berührung sensiblen Bereiche in der Anzahl 12 auf der inneren Fläche am Umfang des Glases jeweils an einer Position angeordnet sind, die einer Stundenangabe entspricht, wobei jeder sensible Bereich eine Ziffer eines einzugebenden persönlichen Codes repräsentiert oder dazu bestimmt ist, eine Operation oder einen eingegebenen persönlichen Code für gültig zu erklären oder ein besonderes Menü auszuwählen, und dass wenigstens eine der taktilen Tasten der Aktivierung oder der Deaktivierung der taktilen Tasten dient.

10. Tragbarer Gegenstand (2) nach einem der Ansprüche 8 und 9, **dadurch gekennzeichnet, dass** in einer Dateneingabebetriebsart wenigstens ein Stundenangabezeiger (24, 25) unter der Steuerung des Mikroprozessors (4) in eine Zeitangabeposition verlagert werden kann, die jedem sensiblen Bereich (22) entspricht, der durch einen Finger eines Anwenders aktiviert wird, um jede eingegebene Ziffer, die an den Chip mit Identifizierungscode übertragen werden soll, visuell und nacheinander anzugeben.

11. Tragbarer Gegenstand (2) nach Anspruch 10, **dadurch gekennzeichnet, dass** die zwei Stundenangabezeiger (24, 25) abwechselnd unter der Steuerung des Mikroprozessors (4) in eine Zeitangabeposition verlagert werden, die jedem sensiblen Bereich (22) entspricht, der durch einen Finger des Anwenders aktiviert wird, um jede eingegebene Ziffer, die zu dem Chip mit Identifizierungscode übertragen werden soll, visuell und nacheinander nach jeder Aktivierung des entsprechenden sensiblen Bereichs anzugeben.

12. Tragbarer Gegenstand (2) nach einem der Ansprüche 8 bis 10, **dadurch gekennzeichnet, dass** jede Ziffer, die über einen für Berührung sensiblen Bereich, der der Gesamtheit taktiler Tasten der manuellen Eingabemittel (22) entspricht, eingegeben wird, auf einer Flüssigkristallanzeigevorrichtung (23) visualisiert wird.

13. Tragbarer Gegenstand (2) in Form einer Armbanduhr nach einem der vorhergehenden Ansprüche, **dadurch gekennzeichnet, dass** der Transponder (1), der einen Chip (1') mit Identifizierungscode besitzt, an oder in dem Armband der Uhr angebracht ist, während der Mikroprozessor (4) in einem Gehäuse der Uhr angebracht ist, und dass Verbindungsleiterbahnen die Kontaktanschlüsse (CS, SCK, SIN, SOUT, INT) des Chips (1') mit dem Mikroprozessor (4) über Leiterkanäle, die durch das Gehäuse der Uhr hindurch angeordnet sind, verbinden.
